# EUROPÄISCHE PATENTSCHRIFT

(11) **EP 1 771 314 B1**
(45) Veröffentlichungstag und Bekanntmachung des Hinweises auf die Patenterteilung: **12.03.2008**
(21) Anmeldenummer: 05755976.7
(22) Anmeldetag: 16.06.2005
(51) Int. Cl.: B60K 23/08

(54) **VERFAHREN ZUR AUTOMATISCHEN BETÄTIGUNG VON LÄNGSSPERREN BEI ALLRADGETRIEBENEN FAHRZEUGEN, INSBESONDERE BEI ARBEITSMASCHINEN UND EINSATZFAHRZEUGEN**
METHOD FOR AUTOMATICALLY ACTUATING LONGITUDINAL BLOCKS IN FOUR WHEEL DRIVE VEHICLES, IN PARTICULAR IN WORKING MACHINES AND SERVICE VEHICLES
PROCEDE D'ACTIONNEMENT AUTOMATIQUE DE DISPOSITIFS DE BLOCAGE LONGITUDINAL DANS DES VEHICULES A TRANSMISSION INTEGRALE, EN PARTICULIER DANS DES MACHINES DE TRAVAIL ET DES VEHICULES D'INTERVENTION

(30) Priorität: 30.07.2004 DE 102004037196
(43) Veröffentlichungstag der Anmeldung: 11.04.2007
(73) Patentinhaber: ZF FRIEDRICHSHAFEN AG, 88038 Friedrichshafen (DE)
(72) Erfinder: BURKHART, Hugo, 88213 Ravensburg (DE); AUMANN, Bernd, 88279 Amtzell (DE)
(86) Internationale Anmeldenummer: PCT/EP2005/006443
(87) Internationale Veröffentlichungsnummer: WO 2006/012943

(56) Entgegenhaltungen:
- EP-A- 0 424 932
- EP-A- 1 253 040
- WO-A-99/32805
- DE-A1- 19 641 101
- US-A- 5 373 912

## Beschreibung

Die vorliegende Erfindung bezieht sich auf ein Verfahren zur automatischen Betätigung von Längssperren bei allradgetriebenen Fahrzeugen, insbesondere bei Arbeitsmaschinen und Einsatzfahrzeugen, gemäß dem Oberbegriff des Patentanspruchs 1.

Herkömmliche knickgelenkte Baumaschinen, beispielsweise Muldenkipper bzw. radgelenkte Ackerschlepper, Bau- oder Spezialmaschinen sind mit Lastschaltgetrieben, umfassend Drehmomentwandler bzw. Strömungskupplungen ausgerüstet. Im Getriebeabtrieb ist üblicherweise bei Muldenkippem und Ackerschleppem ein Zwischenachsdifferential eingebaut, welches ungesperrt eine Drehmomentverteilung zwischen Vorder- und Hinterachsen zulässt und gesperrt einen direkten Durchtrieb realisiert. Des weiteren ist in den Achsen des Fahrzeugs je ein Querdifferential eingebaut.

Differentiale von allradgetriebenen Fahrzeugen werden über Sperrkupplungen (Differentialsperren) aktiviert, wobei diese Sperrkupplungen automatisch oder manuell anhand von Fahrparametern des Fahrzeuges zum Sperren des Differentials eingerückt bzw. zum Öffnen oder Ausschalten der Differentialsperre ausgerückt werden.

Das Zuschalten von lastschaltbaren Differentialsperren, die beispielsweise als hydraulisch betätigte Lamellenkupplungen ausgebildet sein können, kann durch Schlupfkontrolle, d.h. durch Vergleich der Räderdrehzahlen automatisiert werden.

Aus der DE 197 49 919 A1 ist ein solches Verfahren bekannt. Hierbei werden im Rahmen einer Schlupfkontrolle die Drehzahlen der beiden Ausgangswellen des Differentials miteinander verglichen, wobei aus diesem Vergleich Schlupfsignale gebildet werden, die, sobald sie einen Schwellenwert überschreiten, das Einrücken der Sperrkupplung des jeweiligen Difierentials unter Berücksichtigung des Lenkwinkels einleiten. Ein weiteres Verfahren, im Rahmen dessen die Räderdrehzahlen ermittelt werden, ist Gegenstand der DE 197 48 086 A1.

Die Drehzahlmessung an den Rädern ist aufgrund der geringen auftretenden Drehzahlen bei Arbeitsmaschinen und Einsatzfahrzeugen aufwändig und zudem, wegen der exponierten Lage und der harten Einsatzbedingungen, potenziell unzuverlässig.

Aus der EP 0 424 932 B1 ist es bekannt, zum Ausschalten der Differentialsperre, d.h. zum Ausrücken der Sperrkupplung, das Verhältnis der an zwei Getriebewellen auftretenden Drehmomente als Kennwert zu verwenden und diesen laufend ermittelten Ist-Kennwert mit einem durch die Getriebeübersetzung bestimmten Momentenverhältnis als Soll-Kennwert zu vergleichen. Aufgrund dieses Vergleichs wird eine weitere Stellvorrichtung zur Änderung der Drehmomentbelastung des An- und/oder Abtriebsstrangs in Abhängigkeit von der Abweichung verwendet. Mit dieser Stellvorrichtung werden die für das Lösen der Sperrkupplung erforderlichen Schaltbedingungen erfüllt, so dass nach Erreichen dieser Schaltbedingung die Sperrkupplung ausgerückt und damit die Differentialsperre geöffnet bzw. ausgeschaltet wird.

Aus der EP 0 410 441 A2 ist ein Ausgleichsgetriebe für Kraftfahrzeuge bekannt, bei dem aufgrund von Fahrparametern eine Differentialsperre ein- und ausschaltbar ist. Für das Schalten der Differentialsperre werden Betriebsdaten des Kraftfahrzeugs einem Steuergerät zugeführt, und zwar insbesondere Drehzahlen von mindestens zwei Antriebswellen. Um das Ausschalten der Differentialsperren zu ermöglichen, ohne nach einer Sperre - wie oben erwähnt - die zugehörige Sperrkupplung zur Messung von Drehzahldifferenzen immer wieder lösen zu müssen, wird dort vorgeschlagen, an den Wellen Sensoren zur laufenden Drehmomenterfassung anzuordnen. In einem Steuergerät sind Zustandsgrößen gespeichert, insbesondere ein der Stellung des Gashebels zugeordneter Wert und ein dem gewählten Getriebegang des Fahrzeugs zugeordneter Drehmomentwert sowie ferner das Verhältnis zweier Drehmomente zum Ausschalten der Differentialsperre. Durch Vergleich dieser gespeicherten Werte mit den aktuellen Werten kann das Ein- und Ausschalten der Differentialsperre den jeweiligen Fahrzuständen des Fahrzeugs besser angepasst werden.

Die Implementierung des Verfahrens zur automatischen Betätigung von Differentialsperren nach dem Stand der Technik erweist sich in nachteiliger Weise, auch wegen der benötigten Sensorik, als technisch aufwändig und kostenintensiv, insbesondere für die Anwendung bei Arbeitsmaschinen und Einsatzfahrzeugen. Des weiteren wirkt sich die Verwendung von Selbstsperrdifferentialen negativ auf den Kraftstoffverbrauch aus.

Aus der DE 196 41 101 A ist ein Verfahren mit den Merkmalen des Oberbegriffs des Anspruchs 1 bekannt.

Der vorliegenden Erfindung liegt die Aufgabe zugrunde, ein Verfahren zur automatischen Betätigung von Längssperren bei allradgetriebenen Fahrzeugen, insbesondere bei Arbeitsmaschinen und Einsatzfahrzeugen, anzugeben, das zu dessen Durchführung bereits vorhandene Parameter benötigt und den Fahrzustand des Fahrzeugs gerade in kritischen Situationen nicht ungünstig beeinflusst. Des weiteren soll das erfindungsgemäße Verfahren keine zusätzliche Sensorik benötigen.

Diese Aufgabe wird gemäß der Erfindung durch die Merkmale des Patentanspruchs 1 gelöst. Weitere Ausgestaltungen und Vorteile gehen aus den Unteransprüchen hervor.

Demnach wird vorgeschlagen, dass die Längssperren zugeschaltet werden, wenn die Fahrzeuggeschwindigkeit einen vorgegebenen Schwellenwert v_1 unterschreitet und das Getriebeabtriebsmoment einen vorgegebenen Schwellenwert T_Ab1 überschreitet und dass die eingelegten Längssperren beim Überschreiten eines weiteren vorgegebenen Schwellenwertes v_2 oder beim Unterschreiten eines weiteren Schwellenwertes T_Ab2 für das Getriebeabtriebsmoment geöffnet werden, wobei v_2 größer als v_1 und T_Ab2 kleiner als T_Ab1 ist.

Hierbei liegt dem erfindungsgemäßen Verfahren die Überlegung zugrunde, dass diese Bedingungen ausreichen, um einen Sperrbedarf im Arbeitseinsatz zu erkennen, und dass die Längssperren nur in Fahrsituationen eingelegt werden, bei denen das Fahrverhalten des Fahrzeugs nicht merklich beeinträchtigt wird: Wenn nämlich das Getriebeabtriebsmoment hoch und die Fahrzeuggeschwindigkeit gering ist, ist die Wahrscheinlichkeit hoch, dass ein Rad durchrutscht. Wenn das Getriebeabtriebsmoment gering ist, oder wenn die Fahrzeuggeschwindigkeit hoch ist, ist die Gefahr, dass ein Rad durchrutscht, gering. Durch das erfindungsgemäße Öffnen der Sperren bei hohen Geschwindigkeiten werden zudem fahrkritische Situationen vermieden.

Durch die erfindungsgemäße Konzeption wird gewährleistet, dass die Längssperren immer dann offen sind, wenn Fahrsituationen auftreten, bei denen die Sperrwirkung sicher nicht benötigt wird, wobei in allen anderen Situationen die Längssperren geschlossen sind. Auf diese Weise entfällt die nach dem Stand der Technik benötigte Sensorik zum Erkennen der Notwendigkeit einer Sperre.

Der als Parameter benötigte Wert des Getriebeabtriebsmomentes kann in vorteilhafter Weise über den eingelegten Gang und die Differenzdrehzahl des hydrodynamischen Wandlers ermittelt werden.

Um zu gewährleisten, dass die Längssperren nicht in Fahrsituationen aktiviert werden, bei denen sich das Fehlen der Differentialwirkung negativ auf das Fahrverhalten auswirkt, kann der Schwellenwert des Getriebeabtriebsmomentes T_Ab1 entsprechend hoch eingestellt werden.

Im Rahmen einer besonders vorteilhaften Variante des erfindungsgemäßen Verfahrens wird vorgeschlagen, dass der Schwellenwert des Getriebeabtriebsmomentes T_Ab1 vom Fahrer mittels einer geeigneten Einrichtung, beispielsweise eines Drehpotentiometers im Armaturenbrett, entsprechend den Fahrzeugeinsatzbedingungen eingestellt werden kann. Dadurch kann in Abhängigkeit vom Arbeitseinsatz, vom Wetter, von der Fahrbahnbeschaffenheit etc. der Schwellenwert T_Ab1 für das Getriebeabtriebsmoment angepasst werden. Auf diese Weise kann der Fahrer den Schwellenwert bei schmierigem oder sehr unebenen Untergrund derart einstellen, dass die Längssperren bei einem kleinen Drehmoment geschlossen werden; bei griffigem Untergrund können durch eine entsprechende Einstellung die Längssperren erst bei höherem Drehmoment geschlossen werden. Da sich diese Parameter im Allgemeinen während eines typischen Arbeitseinsatzes nur selten ändern, sind manuelle Eingriffe nicht bzw. nur selten notwendig.

Gemäß der Erfindung ist vorgesehen, dass eine Änderung des Wertes des Schwellenwertes des Getriebeabtriebsmomentes T_Ab1 auch in einer Änderung des Schwellenwertes des Getriebeabtriebsmomentes T_Ab2 resultiert. Dies kann beispielsweise über einen in der Steuerung abgelegten Algorithmus oder eine Kennlinie erfolgen.

Beispielsweise können für den Fall, dass ein Potentiometer zur Einstellung des Schwellenwertes T_Ab1 verwendet wird, folgende Funktionalitäten in Abhängigkeit von der Potentiometererstellung realisiert werden:
Endanschlag 1: Längssperren werden nie geschlossen;
Endanschlag 2: Längssperren werden manuell zugeschaltet; und
Bereich zwischen Endanschlag 1 und Endanschlag 2: Stufenlose Einstellung des Schwellenwertes T_Ab1.

Durch diese Ausgestaltung sind weitere Eingriffe des Fahrers nicht notwendig, derart, dass der üblicherweise im Fahrzeug vorgesehene Fußschalter für die manuelle Sperrenzuschaltung entfallen kann. In vorteilhafter Weise werden zur Durchführung des Verfahrens keine zusätzlichen Sensoren benötigt, da als Drehzahlsensor der bereits vorhandene Sensor im Getriebeabtrieb verwendet wird. Des weiteren kann bei der Ansteuerung der Längssperren in einem knickgelenkten Muldenkipper der nach dem Stand der Technik vorhandene Lenkwinkelgeber entfallen.

Gemäß der Erfindung kann auch vorgesehen sein, dass der Schwellenwert für die Fahrzeuggeschwindigkeit v_1 vom Fahrer eingestellt werden kann.

Das erfindungsgemäße Verfahren ist insbesondere für schnelle Arbeitsmaschinen und Einsatzfahrzeuge geeignet, beispielsweise für Dumper, deren Haupteinsatz der Transporteinsatz ist.

Basierend auf der Erkenntnis, dass eine Zuschaltung der Längssperre bei 80 % der benötigen Einsatzfälle ausreicht und nur in 20 % der benötigen Einsatzfälle die Längssperre und die Quersperren benötigt werden, wird für schnelle Fahrzeuge, welche Quersperren und Längssperre(n) umfassen, vorgeschlagen, die Längssperren gemäß dem erfindungsgemäßen Verfahren zu betätigen und die Quersperren manuell über beispielsweise einen Knopf zuschaltbar auszuführen. Es besteht aber auch die Möglichkeit, die Quersperre automatisiert auszuführen.

## Patentansprüche

1. Verfahren zur automatischen Betätigung von Längssperren bei allradgetriebenen Fahrzeugen, insbesondere bei Arbeitsmaschinen und Einsatzfahrzeugen, wobei die Längssperren immer dann offen sind, wenn Fahrsituationen auftreten, bei denen die Sperrwirkung sicher nicht benötigt wird, wobei in allen anderen Situationen die Längssperren geschlossen werden, **dadurch gekennzeichnet, dass** die Längssperren zugeschaltet werden, wenn die Fahrzeuggeschwindigkeit einen vorgegebenen Schwellenwert v_1 unterschreitet und das Getriebeabtriebsmoment einen vorgegebenen Schwellenwert T_Ab1 überschreitet, und dass die eingelegten Längssperren geöffnet werden, wenn ein weiterer vorgegebener Schwellenwert v_2 von der Fahrgeschwindigkeit überschritten wird, oder ein weiterer Schwellenwert T_Ab2 vom Getriebeabtriebsmoment unterschritten wird, wobei der Schwellenwert v_2 größer als der Schwellenwert v_1 und der Schwellenwert T_Ab2 kleiner als der Schwellenwert T_Ab1 ist.

2. Verfahren zur automatischen Betätigung von Längssperren nach Anspruch 1, **dadurch gekennzeichnet, dass** der Schwellenwert des Getriebeabtriebsmomentes T_Ab1 vom Fahrer einstellbar ist.

3. Verfahren zur automatischen Betätigung von Längssperren nach Anspruch 2, **dadurch gekennzeichnet, dass** eine Änderung des Wertes des Schwellenwertes des Getriebeabtriebsmomentes T_Ab1 in einer Änderung des Schwellenwertes des Getriebeabtriebsmomentes T_Ab2 resultiert, was über einen in der Steuerung abgelegten Algorithmus oder eine Kennlinie erfolgt.

4. Verfahren zur automatischen Betätigung von Längssperren nach Anspruch 2 oder 3, **dadurch gekennzeichnet, dass** zur Einstellung des Schwellenwertes T_Ab1 ein Potentiometer verwendet wird, wobei folgende Funktionalitäten in Abhängigkeit von der Potentiometererstellung realisiert werden:
Endanschlag 1:
Längssperren werden nie geschlossen;
Endanschlag 2:
Längssperren werden manuell zugeschaltet und
Bereich zwischen Endanschlag 1 und Endanschlag 2:
Stufenlose Einstellung des Schwellenwertes T_Ab1.

5. Anwendung des Verfahrens nach einem der Ansprüche 1 bis 4 bei einer schnellen Arbeitsmaschine, welche Quersperren und Längssperre(n) umfasst, insbesondere bei einem Dumper, wobei die Quersperren manuell zuschaltbar ausgeführt sind.

## Claims

1. Method of automatically actuating longitudinal blocks on four-wheel drive vehicles, in particular on working machines and service vehicles, whereby the longitudinal blocks are always open in the event of driving situations in which the blocking action is definitely not needed, and the longitudinal blocks are closed in all other situations, **characterised in that** the longitudinal blocks are engaged when the vehicle speed falls below a predefined threshold value V_1 and the transmission output torque exceeds a predefined threshold value T_Ab1, and the engaged longitudinal blocks are opened when another predefined threshold value v_2 of the driving speed is exceeded or there is a drop below another threshold value T_Ab2 of the transmission output torque, and the threshold value v_2 is higher than the threshold value v_1 and the threshold value T_Ab2 is lower than the threshold value T_Ab1.

2. Method of automatically actuating longitudinal blocks as claimed in claim 1, **characterised in that** the threshold value of the transmission output torque T_Ab1 can be set by the driver.

3. Method of automatically actuating longitudinal blocks as claimed in claim 2, **characterised in that** a change in the value of the threshold value of the transmission output torque T_Ab1 results in a change in the threshold value of the transmission output torque T_Ab2, which takes place on the basis of an algorithm or a characteristic curve stored in the control system.

4. Method of automatically actuating longitudinal blocks as claimed in claim 2 or 3, **characterised in that** a potentiometer is used to set the threshold value T_Ab1, and the following functions can be run depending on the potentiometer setting:
end stop 1:
longitudinal blocks are never closed;
end stop 2:
longitudinal blocks are manually engaged and
area between end stop 1 and end stop 2:
continuous adjustment of the threshold value T_Ab1.

5. Implementation of the method as claimed in one of claims 1 to 4 on a fast working machine incorporating transverse blocks and longitudinal block(s), in particular a dumper, whereby the transverse blocks are designed to be manually engaged.

## Revendications

1. Procédé pour l'actionnement automatique de blocages longitudinaux dans des véhicules à transmission intégrale, en particulier dans des engins de chantiers et dans des véhicules de secours, dans lequel les blocages longitudinaux sont toujours ouverts lorsque se présentent des situations de conduite dans lesquelles l'action de blocage n'est pas certainement nécessaire, tandis que, dans toutes les autres situations, les blocages longitudinaux sont fermés, **caractérisé en ce que** les blocages longitudinaux sont enclenchés lorsque la vitesse du véhicule franchit un seuil prédéterminé v_1 dans le sens décroissant et que le couple de sortie de la transmission franchit un seuil prédéterminé T_Ab1 dans le sens croissant, et **en ce que** les blocages longitudinaux enclenchés sont ouverts lorsqu'un autre seuil prédéterminé v_2 est franchi par la vitesse du véhicule dans le sens croissant, ou qu'un autre seuil T_Ab2 est franchi dans le sens décroissant par le couple de sortie de la transmission, le seuil v_2 étant plus haut que le seuil v_1 et le seuil T_Ab2 étant plus bas que le seuil T_Ab1.

2. Procédé pour l'actionnement automatique de blocages longitudinaux selon la revendication 1, **caractérisé en ce que** le seuil du couple de sortie de la transmission T_Ab1 peut être réglé par le conducteur.

3. Procédé pour l'actionnement automatique de blocages longitudinaux selon la revendication 2, **caractérisé en ce qu'**une modification du seuil du couple de sortie de la transmission T_Ab1 entraîne une modification du seuil du couple de sortie de la transmission T_Ab2, ce qui s'effectue au moyen d'un algorithme enregistré dans la commande, ou au moyen d'une courbe caractéristique.

4. Procédé pour l'actionnement automatique de blocages longitudinaux selon la revendication 2 ou 3, **caractérisé en ce que** l'on utilise un potentiomètre pour le réglage du seuil T_Ab1, les fonctionnalités suivantes étant réalisées en fonction de la position du potentiomètre :
butée de fin de course 1 :
les blocages longitudinaux ne sont jamais fermés;
butée de fin de course 2 :
les blocages longitudinaux sont enclenchés manuellement, et
espace entre la butée de fin de course 1 et la butée de fin de course 2 :
réglage sans palier du seuil T_Ab1.

5. Application du procédé selon l'une des revendications 1 à 4 dans un engin de chantier rapide, qui comprend des blocages transversaux et un ou plusieurs blocages longitudinaux, en particulier dans un dumper, les blocages transversaux pouvant être enclenchés manuellement.
